Europäisches Patentamt

European Patent Office

Office européen des brevets

(19)

(11) Publication number: **0 505 002 A2**

## EUROPEAN PATENT APPLICATION

(21) Application number: 92200766.1

(22) Date of filing: 17.03.92

(51) Int. Cl.5: **C08G 65/28**, C08G 65/34

(30) Priority: 19.03.91 US 672200
19.03.91 US 672199
19.03.91 US 672198
19.03.91 US 672203
19.03.91 US 672202

(43) Date of publication of application:
23.09.92 Bulletin 92/39

(84) Designated Contracting States:
DE DK FR GB IT NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Blytas, George Constantin
14323 Apple Tree Road
Houston, Texas 77079(US)
Inventor: Zuzich, Anne Helene
13210 Old Richmond Road, no. 6
Houston, Texas 77083(US)
Inventor: Holloway, Eugene Leon
2135 Victoria Garden Drive
Richmond, Texas 77469(US)
Inventor: Frank, Harry
13814 Oueensbury
Houston, Texas 77079(US)

(54) Method of preparing polyethercyclicpolyols.

(57) Polyethercyclicpolyols are prepared by thermally condensing a polyol having at least three hydroxyl groups of which at least two of the hydroxyl groups are vicinal, precursors of the polyol, cyclic derivatives of the polyol, or mixtures thereof, and controlling process conditions to avoid substantial undesirable degeneration.

EP 0 505 002 A2

EP 0 505 002 A2

This invention relates to polyethercyclicpolyols having high molecular weights and to the preparation thereof. In particular, the invention relates to the preparation of polyethercyclicpolyols which, due to improved molecular properties and characteristics, permit the preparation of improved drilling fluids which inhibit formation of gas hydrates, prevent shale dispersion, reduce swelling of the formation to improve wellbore stability, reduce fluid loss, and reduce filter cake thickness. Drilling muds incorporating the polyethercyclicpolyols of this invention are excellent substitutes for oil base muds in many applications.

Water-based drilling fluids comprise water, clays or polymers, and various treating agents which control the physical, chemical and/or rheological properties of drilling fluids in wellbores. In order to perform their function as drilling fluid additives, it is theorized, although the invention is not limited to this theory, that the polyethercyclicpolyol mixtures contain large water soluble molecules and have relatively limited crosslinking in view of their high molecular weight. It is difficult to produce polymeric molecules of this type of high molecular weight which do not have extensive crosslinking. Accordingly, the present invention provides a process which overcomes these and other problems in the art as more particularly disclosed hereinafter, and which produces polyethercyclicpolyols of significantly improved characteristics as drilling mud additives.

The purpose of the present invention is to form polyethercyclicpolyols by a thermal condensation reaction. This purpose is achieved by heating a reaction mixture comprising a reactant selected from the group consisting of (a) a polyol having at least three hydroxyl groups of which at least two of the hydroxyl groups are vicinal; (b) precursors of the polyol, (c) cyclic derivatives of the polyol, and (d) mixtures thereof, which heating initiates the thermal condensation; removing water formed during the thermal condensation; and continuing the thermal condensation until a predetermined quantity of moles of water per mole of reactant are removed, wherein the condensation goes to completion without undergoing degeneration, including extensive crosslinking to gel-like structures and carbonization.

In another embodiment, the purpose of the invention is carried out by heating a reaction mixture comprising a reactant selected from the group consisting of (a) a polyol having at least three hydroxyl groups of which at least two of the hydroxyl groups are vicinal, (b) precursors of the polyol, (c) cyclic derivatives of the polyol, and (d) mixtures thereof, which heating initiates the thermal condensation; removing water formed during the thermal condensation; and continuing the thermal condensation, which is initially endothermic, until the condensation becomes essentially thermally neutral, and prior to the reaction becoming exothermic which would lead to substantial undesirable degeneration, that is crosslinking or carbonization.

In yet another embodiment, the purpose of this invention is realized by heating a reaction mixture comprising a reactant selected from the group consisting of (a) a polyol having at least three hydroxyl groups of which at least two of the hydroxyl groups are vicinal, (b) precursors of the polyol, (c) cyclic derivatives of the polyol, and (d) mixtures thereof, which heating initiates the thermal condensation; removing water formed during the thermal condensation; and continuing the thermal condensation to completion while controlling the temperature and pressure of the reaction within predetermined ranges to avoid substantial undesirable degeneration and to maximize molecular weight.

An additional embodiment of the invention achieves its purpose by heating a reaction mixture comprising a basic catalyst and a reactant selected from the group consisting of (a) a polyol having at least three hydroxyl groups of which at least two of the hydroxyl groups are vicinal, (b) precursors of the polyol, (c) cyclic derivatives of the polyol, and (d) mixtures thereof, which heating initiates the thermal condensation; removing water formed during the thermal condensation; and continuing the thermal condensation to completion while controlling the temperature and pressure of the reaction within predetermined ranges to avoid substantial undesirable degeneration linking and to maximize molecular weight.

Another embodiment of the invention achieves the purpose thereof by heating a reaction mixture comprising a reactant selected from the group consisting of (a) a polyol having at least three hydroxyl groups of which at least two of the hydroxyl groups are vicinal, (b) precursors of the polyol, (c) cyclic derivatives of the polyol, and (d) mixtures thereof, which heating initiates the thermal condensation; removing water formed during the thermal condensation; and continuing the thermal condensation while adding additional reactant in such a manner that the reaction proceeds to completion at a rate faster than the additional reactant is being incorporated, thereby maximizing molecular weight of the polyethercyclicpolyol.

The above stated purpose of the invention may also be realized by heating a reaction mixture comprising a reactant selected from the group consisting of (a) a polyol having at least three hydroxyl groups of which at least two of the hydroxyl groups are vicinal, (b) precursors of the polyol, (c) cyclic derivatives of the polyol, and (d) mixtures thereof, which heating initiates the thermal condensation; removing water formed during the thermal condensation; and continuing the thermal condensation and

2

adding a final quantity of additional reactant to the reaction mixture when the thermal condensation is within a preselected degree of completion, thereby buffering the condensation and preventing undesirable degeneration (i.e., crosslinking and/or carbonization).

The invention further relates to a polyethercyclicpolyol of a reactant selected from the group consisting of (1) a polyol having at least three hydroxyl groups of which at least two of the hydroxyl groups are vicinal, (2) precursors of the polyol, (3) cyclic derivatives of the polyol, and (4) mixtures thereof, having a weight average molecular weight in the range of from 50 000-300 000. Suitably the reactant is glycerol.

Additionally, to increase the molecular weight of the polyethercyclicpolyols, prior to the thermal condensation going to completion an aromatic compound containing at least two hydroxyl groups is suitably admixed with the reaction mixture.

Suitably, the amount of the aromatic compound is 0.5 to 10 % by weight of the total reactant mixture.

Suitably the aromatic compound is selected from the group consisting of bisphenol A, catechol, hydroquinone, resorcinol, 4,4',4''-methylidenetrisphenol and 4,4',4'',4'''-ethylidene tetrakisphenol.

In an alternative embodiment the molecular weight of the polyethercyclicpolyols can be increased by admixing with the reaction mixture prior to the thermal condensation going to completion an aliphatic dihydric alcohol.

Suitably the amount of aliphatic dihydric alcohol is up to 25 % by weight of the total reactant mixture.

Suitably the aliphatic dihydric alcohol is selected from the group consisting of ethylene glycol, propylene glycol, diethylene glycol, dipropylene glycol, triethylene glycol, tripropylene glycol and butanediol.

In a further alternative embodiment the molecular weight of the polyethercyclicpolyols can be increased by admixing with the reaction mixture prior to the thermal condensation going to completion epoxy alcohol.

Suitably the amount of epoxy alcohol is 5 to 35 % by weight of the total reactant mixture. The epoxy alcohol is suitably glycidol.

In a further alternative embodiment the molecular weight of the polyethercyclicpolyols can be increased by admixing with the reaction mixture prior to the thermal condensation going to completion epihalohydrin and an alkali metal salt.

Suitably the amount of epihalohydrin is 5 to 35 % by weight of the total reaction mixture and the alkali metal hydroxide is added in a molar ratio of 0.85 to 4.0 basis the epihalohydrin. The epihalohydrin is suitably epichlorohydrin and the alkali metal hydroxide is suitably sodium hydroxide.

Polyethercyclicpolyols are those having at least 6 carbon atoms, at least 2 hydroxyl groups, and at least 2 ether linkages, but no more than 1 800 carbon atoms, 450 hydroxyl groups, and 600 ether linkages. More preferably, polyethercyclicpolyols are those having at least 15 carbon atoms, 5 ether linkages, and at least 5 hydroxyl groups, or at least 15 carbon atoms, at least 7 ether linkages, and at least 3 hydroxyl groups. Most preferably, polyethercyclicpolyols are those having at least 18 carbon atoms, at least 6 hydroxyl groups, and at least 6 ether linkages but preferably no more than 1 200 carbon atoms, 300 hydroxyl groups, and 400 ether linkages. Weight average molecular weights, $M_w$, (defined infra) preferably range from 50 000 to 200 000. Hereinafter "poly" is used to mean two or more, "mono" is used to mean one, "cyclic" is used to mean one or more rings, "ether" is used to mean one or more ether linkages, and polyethercyclicpolyol may also be called PECP or polycyclicpolyetherpolyol.

Polyethercyclicpolyols are prepared by polycondensation of the reactants selected from the group consisting of (a) a polyol having at least three hydroxyl groups of which at least two of the hydroxyl groups are vicinal; (b) precursors of the polyol, (c) cyclic derivatives of the polyol, and (d) mixtures thereof, in chemical processes which are accompanied by significant expulsion of water molecules from the polymerizing compounds. The number of ether linkages equals the number of water molecules expelled.

Useful reactants are polyols that are at least trihydric and have at least two hydroxyl groups in a vicinal position are required. Nonlimiting examples include monomers, oligomers and telomers of polyhydric alcohols (or their precursors, or combinations thereof) such as glycerol (which is a suitable feedstock), telomers of glycerol such as diglycerols, triglycerols, tetraglycerols, pentaglycerols, and hexaglycerols, mixtures of glycerol and telomers of glycerol such as diglycerol and triglycerols, mixtures of telomers of glycerol, 1,5,6,9-decanetetrol, 1,2,4,5-cyclohexanetetramethanol, 1,2,4,7-heptanetetrol, 1,2,3,5-heptanetetrol, 4,4-dimethyl-1,2,3-pentanetriol, 1,3,4-cycloheptanetriol, 1,2,3-pentanetriol, 1,2,4-pentanetriol, 2,3,4-pentanetriol, 1,2,3-cyclopentanetriol, 1,2,3-hexanetriol, 1,2,4 -hexanetriol, 1,2,3,4-hexanetetrol, 1,2,4-cyclohexanetriol, 1,2,5-cyclohexanetriol, 1,2,3,4-cyclohexanetetrol, 1,2,3,5-cyclohexanetetrol, butanetriols, such as 1,2,4-butanetriol and copolymers of ethylene glycol and propylene glycols with the preceding alcohols.

An important class of polyhydric alcohols with straight carbon chains and four or more hydroxyl groups, called sugar alcohols, can also be used in preparing additive formulations containing cyclic polyethers. Sorbitol and mannitol are two such well known polyhydric alcohols.

Precursors of trihydric polyols are suitable feeds. For example, glycidol, an epoxy alcohol which is a precursor of glycerol, reacts by simple addition not involving dehydration or requiring the presence of catalysts such as sodium hydroxide and sodium acetate. Other examples are epichalohydrin, such as epichlorhydrin which, upon reaction with water and an alkali metal base, such as sodium hydroxide, hydrolyzes to give glycerol and alkali metal halide. This latter mixture then can be thermally condensed to yield polyethercyclicpolyols.

Representative precursors of the polyols of interest as feeds in this invention are all epoxides which satisfy the criterion of possessing at least one epoxide and one or more hydroxyl groups. Hence, such precursors include glycidol derivatives with an alkyl or aryl subtituent.

Derivatives of polyols are also useful feeds. For example, derivatives of glycerol, including linear and cyclic dimers, such as cis or trans- 2,5-bis(hydroxymethyl)-p-dioxane, cis- or trans-2,6-bis-(hydroxymethyl)-p-dioxane, and the glycerine acetal of hydracrylaldehyde can separately, or in combination, dimerize or can react with glycerol to produce polyethercyclicpolyols.

Other trihydric alcohols may yield cyclicetherdiols. Further polycondensation of the cyclicetherdiols will yield polycyclicetherpolyols with structures which depend on which hydroxyl groups are involved in the condensation reaction.

Known commercial mixtures of bis(hydroxymethyl)-p-dioxanes and polyols can react to produce polyethercyclicpolyols. Polyols, e.g., polyglycerols, of a degree of dehydration corresponding from 0.5 to 1.0 moles water per mole of polyol are suitable feedstock. Such polyol mixtures comprise cyclic ethers. Footstill bottoms (heavy ends from the manufacture of glycerol) are mixtures of glycerol, bis-(hydroxymethyl)-p-dioxanes, linear polyglycerols, and small amounts of low molecular weight polyethercyclicpolyols, are useful feedstock.

Byproduct or effluent streams from other existing processes for which the principal products are resins, soaps, and the like, can be excellent feedstocks. Exemplary are process streams of glycerol/glycidol mixtures which may also contain other components, for example, mixtures of glycerol, glycidol, epichlorohydrin, dimethyl ketone, isopropyl alcohol, and/or sodium chloride made in the manufacture of resins. Such streams may first be processed to remove the nonglycerol-related material, for example, sodium chloride. Effluent streams from processes such as resin manufacture fit this category of feedstock. Such streams may contain predominantly water and salt (10 to 15 percent by weight) with also small amounts of glycerol, glycidol, bis(hydroxymethyl)-p-dioxanes, and polyethercyclicpolyols of low molecular weight (and therefore initially ineffective for the use in drilling fluids). For example, in an existing plant, the components of an effluent stream are 12 to 15 percent by weight sodium chloride, 0.3 to 2 percent by weight glycerol, 0.3 to 1.2 percent by weight glycidol, and less than 0.5 percent by weight polyglycerols, bis-(hydroxymethyl)-dioxanes, and low molecular weight polyethercyclicpolyols, with the balance being water.

In a typical preparation in accordance with the invention, a polyol such as glycerol (which is a suitable feedstock) containing small amounts of catalyst such as sodium hydroxide, preferably along with small amounts of sodium acetate, are reacted in distillation apparatus under conditions which allow water to be removed overhead, but not substantial amounts of glycerol or its dimers and trimers. The catalyst, alkali metal hydroxide, preferably sodium hydroxide, is in a suitable concentration of 0.5 to 1.5 percent by weight of the reaction mixture and alkali metal acetate, preferably sodium acetate, in like or smaller amounts. Other suitable catalysts include potassium, lithium or calcium hydroxide or other condensation catalysts, such as sodium tungstate or tin (IV) chloride.

The starting pH for the condensation reaction ranges from 5 to 13.5 and is preferably from 8 to 10. The pH gradually declines during the process to 5 to 9.5 and preferably to 6.5 to 9. The materials removed overhead in the distillation are acidic to neutral and have a pH ranging from 3 to 7.

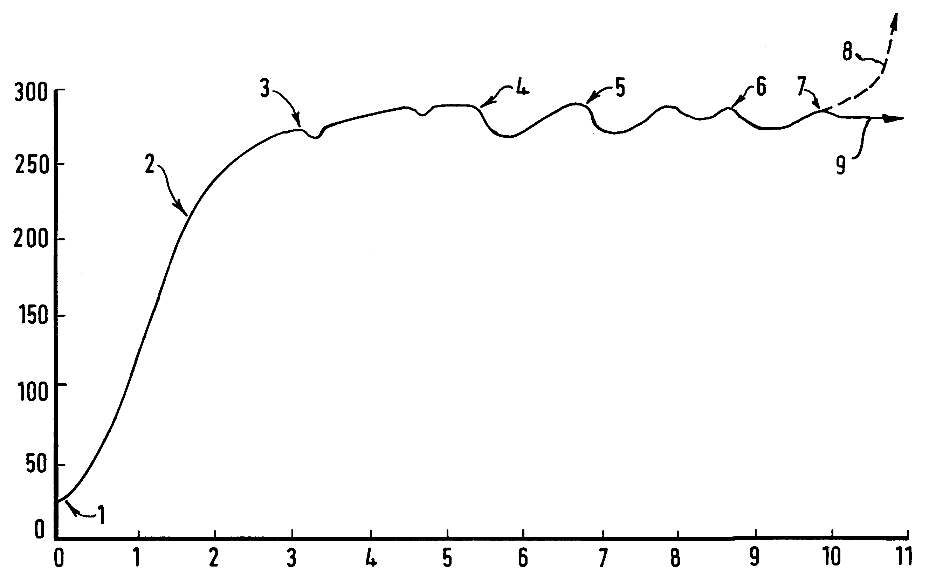

Reference is now made to Figure 1 showing temperature-time plot of a glycerol condensation reaction, wherein the horizontal axis gives the time in hours and the vertical axis the temperature in °C.

The reaction mixture is heated under a pressure of at least 100 mm Hg, and preferably between 150 and 300 mm Hg (indicated with reference numeral 1). For glycerol, more preferably 160 to 230 mm Hg is used. Under these conditions, any free water, which is often present in very small amounts even in dry glycerol, will be distilled off. Moreover, water produced by the condensation reactions will be distilled off continuously, allowing the equilibrium-limited condensation reaction to proceed further and to completion. Water removal may be facilitated by bubbling an inert gas, such as nitrogen, through the mixture. Such bubbling will also ensure thorough mixing. The mixture may also be continuously stirred to ensure thermal equilibrium throughout. The dry glycerol will then begin to rise in temperature to about 210 to 230°C at 150 to 300 mm Hg, at which temperature the mixture refluxes, indicating the onset of reactions which produce water by condensation of the glycerol (indicated with reference numeral 2). By maintaining a pressure of at least 160 mm Hg, the glycerol, which may volatilize along with the water, is condensed in an overhead

4

condenser, which is preferably cooled by a coolant such as water/glycol mixtures. The glycerol and its linear and cyclic dimers, which form in the course of the volatilization process, are thus condensed and refluxed to the reacting mixture. Gradually the procedure results in an increase in the boiling point of the mixture, brought about by the continuous removal of water of condensation and by the increase of the molecular weight of the mixture.

As the degree of the polymerization increases, and the amount of water removed from the glycerol feed increases, the pressure over the mixture is gradually decreased externally, either in a continuous, preferably gradual, mode, or at selected reaction temperatures. For example, it is possible to reduce the pressure to 120 mm Hg (indicated with reference numeral 3) when the mixture reaches 250°C at a pressure of 180 mm Hg. Or alternatively, it is possible to control the pressure to diminish gradually by known mechanical means. Figure 1 discloses a stepwise pressure reduction: 180 mm Hg to 120 mm Hg to 80 mm Hg to 60 mm Hg.

The degree of dehydration during the procedure is monitored in terms of moles of water removed per mole of glycerol left in the product. As the ratio of moles of water removed per mole of glycerol in the product increases, the degree of polymerization of glycerol increases, and the number average molecular weight of the mixture increases. Particularly important is the discovery of the strong relationship between the weight average molecular weight ($M_w$) and the performance of the product as a drilling fluid additive.

The number average molecular weight $M_n$ is determined by the formula: $M_n = \Sigma_i (n_i M_i)/\Sigma_i (n_i)$, wherein i = all molecules in the sample, $n_i$ = the number of molecules, and $M_i$ = the molecular mass of each molecule. This is the average molecular weight obtained when the total weight of the sample is divided by the number of molecules in the sample. This molecular weight determines the effect of the sample composition on the osmotic pressure and hence, the effect of the sample composition on the freezing point or other colligative properties of the total mixture.

The weight average molecular weight $M_w$ is determined by the formula: $M_w = \Sigma_i (n_i M_i^2)/\Sigma_i (n_i M_i)$. This molecular weight number weighs molecules proportionally to their molecular weight in the averaging process; that is, the molecular weight $M_i$ is multiplied by the weight $n_i{}^*M_i$ of material of that molecular weight rather than by the number of molecules. This type of average reflects the effect of the sample composition on those properties which depend on the size of the individual molecules, such as effectiveness in light scattering, or ability of the molecule to penetrate into small openings or plug or cover such openings. Thus, a high $M_w$ would be beneficial if penetration of the molecules into the interplanar structure of layered clays in the formulation is to be avoided. While the invention is not limited by this theory, it is believed that when polyethercyclicpolyols of this invention are used in drilling fluids, the presence of molecules possessing large volumes minimizes the swelling of clay components in the wellbore, thereby improving wellbore stability.

The centrifuge molecular weight is determined by the formula:

$$M_z = \Sigma_i (n_i M_i^3)/\Sigma_i (n_i M_i^2).$$

The ratios $M_w/M_n$ and $M_z/M_w$ are also an indication of the spread or polydispersity in the molecular weight of molecules present in the sample, and by definition $M_w \geqq M_n$. The ratio $M_w/M_n$ ranges from 50 to 500, and most preferably, in the best formulations of polyethercyclicpolyol, it ranges from 100 to 300. The ratio of $M_z/M_w$ ranges from 1 to 100, and in the most suitable formulations it ranges from 2 to 20. The polydispersity of molecular weights is underscored by the appearance of a characteristic binodal molecular weight distribution in virtually all thermal polyethercyclicpolyol samples.

In order to attain high $M_w$ values it is necessary to carry out dehydration as far as possible. By dehydration under gradually decreasing pressure it is possible to achieve a degree of dehydration which approaches and exceeds 1 mole of water per mole of glycerol. At this point, theoretically the glycerol feed could have polymerized to yield a single molecule of infinitely high molecular weight. However, in the course of distillation of glycerol from a basic medium, extensive cyclization takes place, which yields compounds such as cis- or trans-2,5-bis(hydroxymethyl)-p-dioxane, cis- or trans-2,6-bis(hydroxymethyl)-p-dioxane and the glycerine acetal of hydracrylaldehyde, or other 5-, 6-, or 7-membered ring structures of which the first two are predominant. The polycondensation of such cyclic structures with linear or branched polyglycerols yields polyethercyclicpolyols. Excellent polyethercyclicpolyols for drilling fluid applications can be obtained by dehydrating to the extent of 1.15 to 1.2 moles of water per mole of glycerol in the product.

Polyethercyclicpolyols are characterized by the presence of at least one and usually more than one 5- to 7-membered ring structures per individual molecule in at least 80 percent of the molecular mass. Moreover, a minimum of 20 percent, preferably 30 percent, and most preferably 40 percent, of all molecules of reactant participating in the formation of polyethercyclicpolyols are involved in cyclic structures.

A suitable way to achieve such extensive dehydration without undesirable degeneration and gelation of the polyethercyclicpolyols is by the addition of small amounts of polyol, e.g., glycerol, at a later stage of the reaction, for example, when the reaction medium temperature has reached 270 to 280°C at a pressure of 50 to 100 mm Hg, preferably 60 to 90 mm Hg. At least 3 percent by weight of polyol should be added to that effect, although more typically larger aliquots are added not once but several times (indicated with reference numerals 4, 5, 6 and 7). Upon addition of 2 to 6 percent by weight of polyol, e.g., glycerol, (basis final weight of polyol added) at a point after removal, for example, of 0.8 moles of water per mole of polyol, a drop in the temperature of the reacting mixture occurs, the drop being several degrees Centigrade. The drop is caused by the lower temperature of the polyol being added, but more importantly indicates the endothermic nature of the reaction between polyol molecules, or preferably between added polyol molecules and reactive sites in the prepolymerized mixture. For better effectiveness, the added polyol, e.g., glycerol, may be presaturated with alkali metal hydroxide, e.g., sodium hydroxide. Figure 1 shows stepwise addition of polyol with corresponding temperature changes. In general the stepwise addition of glycerol should be initiated when the reaction is at least 40 percent complete (basis the amount of reactant present at the end of the reaction).

Upon continued input of heat from an external source, the temperature of the reacting mixtures rises to the previous highest level, or to a higher level, or to a somewhat lower level than the first high temperature, depending upon the molecular weight distribution of polyethercyclicpolyols in the mixture. This results in at least some of the polymerized polyol compounds achieving higher and higher molecular weights. Since the $M_w$ values are very sensitive to the presence of even small amounts of large molecules, this procedure results in increasing $M_w$ values which, generally results in improved performance in drilling mud formulations. This procedure of incremental polyol addition can be repeated any number of times, three being a convenient number. With three additions of polyol the experimental reaction time usually takes 6.5 to 7 hours, and when optimally performed, excellent polyethercyclicpolyols are obtained.

The final $M_w$ values obtained are a strong function of the maximum temperature used in the polymerization reaction. Typical maximum temperatures range from 250°C to 295°C at a pressure 40 to 80 mm Hg, preferably 270°C to 295°C, and most preferably 275°C to 285°C.

As the reaction approaches 85 percent completion, it is suitable to combine polyol additions with further reductions of pressure, going down to 30 mm Hg, or even lower. This results in deeper dehydration at a given temperature and therefore in higher $M_w$ and $M_n$ values.

As the reaction of the present invention approaches completion, it turns from being highly endothermic to being more thermally neutral, and at a dehydration approaching and exceeding 1.2 moles of water per mole of polyol it can become exothermic. This is a reflection of the propensity of the mixture to undergo rapid degeneration of the complex polyethercyclicpolyol structures. In order to avoid the occurrence of such an undesirable degeneration, it is suitable to buffer the reaction by adding a small amount of monomeric polyol such as glycerol, for example, 0.2 to 2 percent, and preferably 0.3 to 0.9 percent by weight total (indicated with reference numeral 7). Preferably, there is added 0.5 percent by weight of polyol at a selected time such as when reaction is at least 90 percent complete, or preferably at a point where the reaction is 95 percent complete, i.e., after removal of 1.12 to 1.15 moles of water per mole of polyol in the reaction medium.

Figure 1 shows reaction end point control. The dotted line 8 shows what could happen to temperature without a final addition of polyol, as the reaction becomes exothermic, leading to substantial degeneration and the formation of sludge. After reaction is terminated (indicated with reference numeral 9) the polyethercyclicpolyol is removed from the reaction kettle by dilution with at least 20%w water.

The below table gives the extent of the reaction and the relative amounts of water removed (in moles water removed per mole of glycerol) from reaction mixture at the stages in the reaction indicated by the reference numerals in Figure 1.

Table

| Extend of the reaction and relative amount of water removed of the condensation reaction. | | | | | |
|---|---|---|---|---|---|
| | 4 | 5 | 6 | 7 | 9 |
| Glycerol addition (in %) Extent of reaction (in %) | 4 | 4 | 4 | 0.5 | |
| Basis glycerol present | 76 | 78 | 83 | 96 | 100 |
| Basis final total glycerol | 66 | 71 | 79.5 | 96 | 100 |
| Water removed | 0.78 | 0.91 | 1.12 | 1.15 | 1.2 |

With glycerol as the primary reaction medium, it is preferable to remove at least 1.05 and more preferably at least approximately 1.12 moles of water per mole of glycerol. Most preferably 1.15 to 1.25 moles of water per mole of glycerol in the product should be removed. If the feed contains an appreciable amount of predehydrated glycerol polymers, then the remaining dehydration will be less than 1.2 moles per mole of glycerol. As an example, for a known commercial product which typically contains 15 percent by weight of bis(hydroxymethyl)-dioxanes, and 85 percent by weight of glycerol the dehydration can be calculated as follows. For approximately 100 grams of feed there are 85 grams of glycerol (0.99 moles) and 15 grams of bis(hydroxymethyl)-dioxane (0.1014 moles). The glycerol component will have to lose 0.92 X 1.2 = 1.104 moles of water. The 0.1014 moles of bis(hydroxymethyl)-dioxane is derived from 0.2028 moles of glycerol by removal of 0.2028 moles of water; 1.2 total moles water per mole of glycerol should be removed, i.e., 0.2028 * 1.2 = 0.2434 moles. Thus, it is necessary to remove 0.2434 - 0.2028 = 0.0406 moles of water. The total to be removed is 1.104 moles from the glycerol + 0.0406 moles from the bis-(hydroxymethyl)- dioxane = 1.1496 moles water (or approximately 1.145 moles) from the 100 grams of the known commercial product.

Therefore it is necessary to remove close to 1.2 moles of water for each mole of glycerol which enters into the condensation of an initially partially dehydrated glycerol feed stream. Alternatively, in most cases involving complex feed streams, it would be appropriate to carry out the reaction and select a final maximum reaction temperature at set pressure conditions, such as is known from previous experience to yield satisfactory polyethercyclicpolyol preparations.

Certain prehydrated glycerol feeds are not suitable for preparation of good quality polyethercyclicpolyol. An example is an extensively degenerated footstill bottoms (heavy ends from glycerol manufacture). In such cases, an acceptable feed may still be recovered from such materials by proper separation/purification. For example, extraction of the lower molecular weight fraction of a footstill bottom product by use of a low molecular weight alcohol, followed by recovery and reuse of the extracting alcohol. Alternatively, however, small amounts of extensively dehydrated polyglycerols can be used as additive components of the glycerol-rich feed, provided they are not unduly degenerated to yield essentially gel-like compositions.

Molecular weights referred to below have been determined using a three-column gel permeation chromatographic technique using three Ultrahydrogel columns: a Linear column, a 250 angstrom column, and a 120 angstrom column in series, using water solvent at 30°C. Using this technique, polyethercyclicpolyols produced by the methods described herein range from $M_w$ values of 20 000 to 300 000. Preferred polyethercyclicpolyols have $M_w$ values in the range of 50 000 to 200 000.

In accordance with an alternative embodiment of the present invention it has been found that the addition of minor amounts of compounds containing two or more phenolic hydroxyl functionalities, especially bisphenol A (BPA) (or 4,4'-isopropylidenediphenol), is beneficial. Addition of phenolic hydroxyl-containing compounds to the reacting glycerol or polyol medium results in the formation of higher molecular weight polyethercyclicpolyols with substantially improved properties in connection with drilling fluid additive performance.

Although bisphenol A is particularly useful, it is suitable to use other compounds containing two phenolic hydroxyls attached to one or more aromatic rings, such as catechol, resorcinol, hydroquinone, 4,4'-ethylidenediphenol or phenolic novolacs. Phenolic resins are also suitable for this application. Compounds containing three or four phenolic hydroxyls which will direct polymerization along more than one spatial direction are also suitable, such as 4,4',4''-methylidene trisphenol and 4,4',4'',4'''-ethylidene tetrakisphenol. It is theorized, although the invention is not limited to this theory, that the use of phenolic hydroxyl-containing compounds facilitates the coverage of the openings in the clay surface of an oil well through which water can enter the clay. Thus it is believed that molecules which are substantially planar in structure are most useful with the invention when it is employed as a part of a drilling fluid additive. The amount of

EP 0 505 002 A2

phenol hydroxylic-containing compound used is preferably 0.5 to 10 weight percent of the total reactant mixture.

A thermal condensation run which incorporates the bisphenol A copolymerization can be realized as a continuous copolymerization or as a post-treatment step. In the former case, the material may be added in two to four aliquots, generally observing the layer addition until about 40 to 50 percent of the reaction is complete. In the latter case the copolymerization may be stopped before complete dehydration of 1.2 moles of water per mole of glycerol left in the product is actually achieved. In such a case, however, in order to ensure substantial formation of cyclic structures in the polyethercyclicpolyol it is appropriate to dehydrate at least to the level of 1.02 to 1.1 moles of water per mole of glycerol. Such a preparation would typically have $M_w$ values of 20 000 to 40 000. The bisphenol A post-treatment raises the $M_w$ by connecting lower molecular weight polyethercyclicpolyols together into larger units. This also results in the vast majority of molecules (i.e., over 90% of the individual molecules) containing at least one and preferably several cyclic structures (bis(hydroxymethyl)-p-dioxane or 5- or 7-membered rings). The resulting $M_w$ could then be raised to the desired range of 80 000 to 160 000.

In accordance with a further alternative embodiment of the present invention, minor amounts of high boiling aliphatic dihydric alcohols can be used to advantage in the preparation of polyethercyclicpolyols as extenders and as molecular weight boosters, provided certain conditions are satisfied in their selection and in the course of the preparation. The most important prerequisite for a successful incorporation of aliphatic dihydric alcohols is the pressure control during the dehydration reaction. The pressure of the system must be sufficiently high to prevent evaporation of the glycol from the reacting mixture, while at the same time allowing for continuous removal of the water produced by the polycondensation reactions. The distillative separation between water of condensation and the glycols present becomes a more critical constraint in the case of lower molecular weight glycols, such as ethylene glycol. Nevertheless, glycols provide a convenient means of increasing the molecular weight of low molecular weight polyethercyclicpolyols, particularly in a post-reaction step. High boiling glycols, diethylene glycol, triethylene glycol and the like are very suitable glycols for this invention.

Furthermore it has been found that post-treatment of the polyethercyclicpolyols with an epoxy alcohol is beneficial. The post-treatment with epoxy alcohol results in the formation of higher molecular weight polyethercyclicpolyols with substantially improved properties in connection with drilling fluid performance. The post-treatment with epoxy alcohol has the effect that the molecular weight is increased. Unlike the post-treatment with epihalohydrin/alkali metal hydroxide, however, the epoxy alcohol post-treatment is ultimately carried out under the usual thermal polycondensation conditions, with an initial heating period of 110°C for 30 minutes to two hours after the epoxy alcohol addition is made, followed by heating to 250 to 295°C at a pressure of 40 to 80 mm Hg over a two to seven-hour period. An advantage of this process is that there are no byproducts of the post-treatment with epoxy alcohol, such as alkali metal halide, and therefore the sometimes elaborate procedures required for the removal of byproducts are unnecessary.

Epoxy alcohols are compounds which contain both an epoxy group and an alcohol group. This is represented by the structure I (supra).

A suitable epoxy alcohol is glycidol. The amount of epoxy alcohol used is 5 to 35 weight percent of the total reaction mixture.

In polyethercyclicpolyol preparations with an epoxy alcohol post-treatment, the glycerol thermal polycondensation may be stopped before complete dehydration of 1.2 moles of water per mole of glycerol left in the product is actually achieved. In such a case, however, in order to ensure substantial formation of cyclic structures in the polyethercyclicpolyols it is appropriate to dehydrate at least to the level of 1.04 to 1.1 moles of water per mole of glycerol. Such a preparation would typically have $M_w$ values of 20 000 to 40 000. The epoxy alcohol post-treatment raises the $M_w$ by connecting lower molecular weight polyethercyclicpolyols together into larger units. This also results in the vast majority of molecules (i.e., over 80 percent of the individual molecules) containing at least one and preferably several cyclic structures bis-(hydroxymethyl)-p-dioxane or 5-, 6- or 7-membered rings, predominantly bis(hydroxymethyl)-p-dioxane rings). The resulting $M_w$ could then be raised to the desired range of 80 000 to 160 000.

In accordance with a further embodiment of the present invention, it has been found that post-treatment of the polyethercyclicpolyol with epihalohydrin and an alkali metal hydroxide is beneficial. The post-treatment with epihalohydrin and an alkali metal hydroxide results in the formation of higher molecular weight polyethercyclicpolyols with substantially improved properties in connection with drilling fluid performance. An additional benefit is that the post-treatment reaction may be carried out at low temperatures, 60°C to 150°C (preferably 80°C to 135°C) and atmospheric pressures for 0.25 to 8 hours, preferably 1 to 4 hours, thus reducing the possibility of high levels of undesired degeneration which may occur when >1.2 moles of water per mole of the glycerol left in the product are removed in the thermal polycondensation.

8

Alkali metal halide and water are formed stoichiometrically with the epihalohydrin as byproducts of the post-treatment.

Epihalohydrins are compounds which contain an epoxy group and a halogen in the vicinal position to the epoxy group, wherein the halogen is Cl, Br, I or F.

A suitable epihalohydrin is epichlorohydrin. The amount of epihalohydrin used is 5 to 35 weight percent of the total reaction mixture. Alkali metal hydroxides may be sodium hydroxide, potassium hydroxide, lithium hydroxide or calcium hydroxide, with sodium hydroxide being a very suitable alkali metal hydroxide. The alkali metal hydroxide is added in a molar ratio of 0.85 to 4.0 basis the epihalohydrin.

In polyethercyclicpolyol preparations with an epihalohydrin/alkali metal hydroxide post-treatment, the glycerol thermal polycondensation may be stopped before complete dehydration of 1.2 moles of water per mole of glycerol left in the product is actually achieved. In such a case, however, in order to ensure substantial formation of cyclic structures in the polyethercyclicpolyol it is appropriate to dehydrate at least to the level of 1.05 to 1.1 moles of water per mole of glycerol left in the product. Such a preparation would typically have $M_w$ values of 20 000 to 40 000. The post treatment with a mixture of epihalohydrin and alkali metal hydroxide raises the $M_w$ by connecting lower molecular weight polyethercyclicpolyols together into larger units. This also results in the vast majority of molecules (i.e., over 80% of the individual molecules) containing at least one and preferably several cyclic structures (bis(hydroxymethyl)-p-dioxane or 5- or 7-membered rings). The resulting $M_w$ could then be raised to the desired range of 80 000 to 160 000.

The invention will now be described in more detail by way of example with reference to the following examples.

Example 1. Thermal polycondensation of glycerol with final small glycerol addition to avoid exothermicity.

About 859 grams of glycerol were placed in a 2-litre round bottom distillation flask along with 6.2g of sodium hydroxide and 3.6g of sodium acetate and the pressure of the unit was brought to 180 mm Hg using a $N_2$ blanket. The pressure was controlled by a bleed and makeup device using a low pressure $N_2$ source. The temperature was then raised gradually to 220°C kettle temperature at which point reflux was obtained through a 1-inch diameter 15-inch diameter tall Vigreaux column, equivalent to ca. 10 plates, connected to the distillation flask. The column was not insulated. A magnetically controlled variable reflux distillation head was used to control the reflux ratio at 1:1 and water-rich overhead was obtained. Under these conditions, the loss of glycerol to the overhead was kept at a minimum and water-rich overhead was continuously removed as the polycondensation reaction proceeded. By allowing the aqueous overhead to reach a volume of 60 ml (about 62 grams) the boiling temperature of the partially polymerized glycerol mixture reached 247°C at 180 mm Hg. The reaction continued until the boiling point of the mixture reached 250°C at 180 mm Hg. At this point the pressure was adjusted to 100 mm Hg. As a result the kettle temperature was reduced to about 243°C at 100 mm Hg. The reaction was continued, and an additional 60 ml of aqueous overhead was removed by the time the kettle temperature reached 249°C at 100 mm Hg. The reaction continued to a kettle temperature of 260°C and the pressure was reduced to 80 mm Hg, with a resulting drop in temperature of about 2°C. The pressure was reduced again to 60 mm Hg when kettle temperature reached 275°C, with a resulting temperature drop of 3°C. At this point a third 60 cc overhead fraction was collected for a total of 180 cc, as the kettle temperature reached 276°C at 60 mm Hg. At 285°C kettle temperature the pressure was reduced to 40 mm Hg. The reaction was terminated after an additional 60 cc overhead (total 240 cc overhead) at a kettle temperature of 273°C. Shortly before the last fraction was collected, i.e., at 50 cc, an aliquot of 5g of glycerol was added to the mixture to prevent rapid exothermic reaction from setting in, probably caused by the rapid degeneration linking of the produced polyethercyclicpolyols. A total of 1.22 moles of water was recovered per mole of glycerol which was still in the kettle in the form of a polymerized product. The resulting sample contained substantial percentage of the glycerol molecules in cyclic structures and exhibited $M_w$ values of 80 000. A small amount of gel-like product was detected in this preparation. The product was a very viscous semi-solid material at room temperature, but it was totally soluble in 30%w water/ 70%w product mixture.

Example 2. Thermal polycondensation of glycerol in which unpolymerized glycerol is added at a later stage during the course of the reaction.

A similar thermal polycondensation run was performed as the one described in Example 1, except that in this example, the run was initiated with 750g of glycerol in the kettle containing 5.4g sodium hydroxide and 3.6g of sodium acetate used as the catalyst. The reaction was allowed to proceed to a degree of polycondensation resulting in a mixture of polyethercyclicpolyols which had a boiling point of 281°C at 80 mm Hg. At this point 28 cc of sodium hydroxide-saturated glycerol was added through an auxiliary addition funnel, which was attached to the reaction vessel. The addition caused the kettle temperature to drop to 270°C by virtue of its lower temperature and by virtue of the endothermic reaction between the monomeric glycerol and the reactive sites in the partially polymerized polyethercyclic polyols. The kettle temperature was allowed to rise again to 275°C at 80 mm Hg at which point a second addition of 28 cc (36g) of glycerol saturated with NaOH was added. The temperature of the mixture dropped to 261°C and was allowed to come back up to 275°C, at which point the pressure of the system was reduced to 60 mm Hg. The reaction was again allowed to proceed to a degree of polycondensation that resulted in a boiling point of 275°C at 60 mm Hg. At this point a third addition of glycerol (28 cc, 36g) was made and allowed the reaction to proceed to 285°C. Throughout this operation the aqueous overhead containing minor amounts of glycerol and diglycerols was being removed at a 1:1 reflux as per example 1. When a total of 230 cc of overhead were collected, a 5g aliquot of sodium hydroxide-free glycerol was added to prevent the onset of undesirable exothermic reactions. The reaction was terminated at an overhead volume of 240 ccs. At this point 1.2 moles of water were removed per mole of glycerol in the product. The $M_w$ volume obtained was 100 000. No gel-like material was detected in this preparation, indicating less degeneration under the conditions of this run, relative to those in the first example. Thus, addition of glycerol at a later stage reduces the degeneration propensity of high molecular weight polyethercyclicpolyols.

The three glycerol additions made in this run were made at the following points in the course of the reaction.

| Completion of Reaction Basis: | | |
|---|---|---|
| | Glycerol Present | Glycerol at the End |
| First addition | 75.5% | 66% |
| Second addition | 78% | 71% |
| Third addition | 88% | 79.5% |
| Final small additions | 96% | 96% |

The product was a viscous semi-solid material at room temperature, the viscosities decreasing rapidly as the temperature region at which it was formed (250 to 280°C) is approached. The product was water soluble.

Example 3. Thermal polycondensation of a mixture of glycerol and 2,6-bis(hydroxymethyl)-p-dioxane with glycerol and 2,6-bis(hydroxymethyl)-p-dioxane added at later stages.

Into the equipment used in Examples 1 and 2 above was introduced 750g of a mixture consisting of 85%w glycerol and 15%w 2,6-bis(hydroxymethyl)-p-dioxane. The procedure described above in Example 2 was then followed closely as regards to timing of the pressure reductions and glycerol additions, including the timing of the three 28 cc (36g) glycerol additions and the 5g glycerol addition prior to terminating the reaction. In this run, however, the glycerol additions were replaced by addition of feed mixture (presaturated with NaOH). The total overhead volume in this run was ca. 194 cc, or about 200g. The removal of water corresponded to ca. 1.142 moles of water per mole of glycerol constituting the feed, where a 2,6-bis-(hydroxymethyl)-p-dioxane molecule is considered equivalent to 2 moles of glycerol. The $M_w$ achieved was a 65 000.

Example 4. Glycerol/Polyglycerols mixture used as a feed with glycerol added at a later stage.

Into the equipment used in Examples 1 to 3, was introduced a concentrate of glycerol obtained from the effluent of a resins plant. The concentrate contains 59%w glycerol, 10%w 2,6-bis(hydroxymethyl)-p-dioxane, and 19%w oligomers of glycerol, including dimers, trimers, and tetramers. The procedure described in Examples 1 and 2 is followed. The initial feed loading is 795g of the plant concentrate, of which 6 percent is water and 5%w NaCl. A total of 105g of sodium hydroxide-saturated glycerol is added in three doses. The total overhead was ca. 31%w. The polyethercyclic polyol product had a $M_w$ volume of 75 000. Some of the NaCl present precipitates in the course of the reaction due to decreased solubility. However, the entire mass is completely miscible at a 30%w water/70%w polyethercyclicpolyols ratio.

Example 5. Production of polyethercyclicpolyols by thermal polycondensation of a stream containing glycidol, glycerol, water and sodium chloride.

A sample of process stream containing 2.5%w glycidol, 0.2%w glycerol, 3%w isopropyl alcohol, 1.5%w epichlorohydrin, 1%w NaCl, balance water, can be used to produce polyethercyclicpolyols as follows.

The sample is first distilled in a 20-plate distillation column at a bottom temperature of 180 to 200°F, and top pressure of ca. 4 psia. In the distillation essentially all of the epichlorohydrin, isopropyl alcohol, and the major portion of the water, are taken overhead and condensed. The epichlorohydrin and isopropyl alcohol are recovered for reuse in the plant. The bottoms from the distillation column contain 25 to 30%w glycidol, 7 to 15%w glycerol, 30 to 40%w water, and are saturated with salt at ca. 10%w solubility. The bottoms also contain 15%w of solid NaCl when the temperature is allowed to drop to ca. 70°F. The bottoms stream is further dehydrated in a second distillation during which some of the glycidol converts to glycerol. The glycidol/glycerol mixture, either alone or in admixture with more glycerol, constitutes an excellent feed for the formation of polyethercyclicpolyols by thermal polycondensation as discussed in Example 2.

Example 6. Glycerol footstill bottoms as a partial source of polycyclicetherpolyols.

Many processes for the manufacture of synthetic and natural glycerol produce a salt-rich footstill bottoms steam. Some or all of these bottom products are useful as materials of admixture into glycerol feeds for the production of polycyclicetherpolyols. A footstill bottoms sample can be conveniently desalted by mixing with 1-pentanol, 1-butanol, or 1-propanol, which results in copious NaCl precipitation and reduction of the viscosity of the footstill bottoms/NaCl mass. With 1-butanol, the precipitation can be carried out at 90 to 110°C, which allows 98 percent of the salt to precipitate. The mixture is then cooled to allow phase separation of the n-butanol from the desalted footstill bottoms. Small amounts of 1-butanol left in the footstill bottoms phase are removed by distillation. The desalted footstill bottoms are dissolved into glycerol to a level of 5 to 25 percent by weight and the mixture is polycondensed as discussed in Example 2.

Example 7. Using glycerol and polyglycerols obtained from the overheaded aqueous product of the polycondensation reaction.

In Example 2, about 60g of glycerol, diglycerol, and 2,6-bis (hydroxymethyl)-p-dioxane were obtained in the aqueous overhead of 245 grams. The overhead was also slightly acidic at a pH of 4.2. Upon distillation of the water from the overhead, a near-neutral glycerol/oligoglycerol bottoms was obtained (60g) which was admixed with 690g of glycerol to make up the feed for another thermal polycondensation run. The $M_w$ = 110 000, somewhat higher than that obtained in Example 2, reflecting the effect of prepolymerization of part of the glycerol.

Example 8. Formation of polyethercyclicpolyols from glycerol derived by the basic hydrolysis of epichlorohydrin.

A concentrated solution containing 208g of sodium hydroxide (5.2 moles) in a saturated water solution is added to the 2-litre distillation unit described in the preceding examples; 460g of epichlorohydrin (5 moles) are placed in a pressure equalizing addition funnel attached to the distillation unit. The aqueous NaOH mixture is heated to 100°C, and the epichlorohydrin is added slowly to the mixture at a rate sufficient to keep the temperature at about 110°C. The mixture is held at 110°C for four hours. The epichlorohydrin reacts with the sodium hydroxide and water to yield glycerol and NaCl, which is only partially soluble in the mixture. Undissolved NaCl is removed by filtration.

The resulting glycerol/NaCl mixture is then returned to the distillation unit to be dehydrated, and the dry glycerol is thermally polycondensed as described in Example 2 above. The solubility of NaCl in the resulting polyethercyclicpolyol is less than in glycerol, so some precipitation occurs. However, upon addition of 50 percent by weight of water (on the basis of polyethercyclicpolyols present), the entire mixture becomes soluble to give a polyethercyclicpolyol/NaCl/water mixture which is suitable for use directly as a drilling mud additive. Alternatively, much of the salt may be removed from the polyethercyclicpolyol product prior to dilution with water by precipitation with a lower monoalcohol, such as 1-pentanol, 1-butanol, or 1-propanol. The lower monoalcohol may be removed from the polyethercyclicpolyol product mixture after the sale precipitation (followed by a filtration to remove the solid NaCl) by distillation.

Example 9. Post treatment with a mixture of sodium hydroxide and epichlorohydrin.

56.5g of polyethercyclicpolyol, prepared by heating 150g of a commercial polyglycerol/polyglycol preparation in a 200cc autoclave to 290°C at 20psia for 4.5 hours, achieving a polyethercyclicpolyol with $M_n$ = 265 and $M_w$ = 40 000, as analyzed in a 3-column (Ultrahydrogel) gel permeation chromatograph, was added to a 500cc flask fitted with an overhead stirrer and a condenser, and 6.35g sodium hydroxide (0.159 moles, 1.3 moles sodium hydroxide/mole epichlorohydrin) was also added. The mixture was heated to 180°C under a brisk purge of $N_2$ to remove any residual water, and then allowed to cool to 120°C. The mixture was then treated with 11.3g of epichlorohydrin (0.122 moles, 20% weight of the starting polyethercyclicpolyol), added in 1ml increments, such that the reaction temperature was maintained between 120°C and 125°C. The mixture was finally stirred at 125°C for two hours after the epichlorohydrin addition was complete. Both $M_n$ and $M_w$ values were significantly increased, the former to $M_n$ = 675 and the latter to $M_w$ = 85 000. Thus, the marginally performing commercial polyglycerol was upgraded to a satisfactory product.

Example 10. Post treatment with a mixture of sodium hydroxide and epichlorohydrin.

54.5g polyethercyclicpolyol prepared by heating 146g of glycerol concentrate from a resins plant effluent stream to 290°C at 20psia for 4.3 hours, achieving a polyethercyclicpolyol with $M_n$ = 178 and $M_w$ = 30 000, as analyzed in a 3-column (Ultrahydrogel) gel permeation chromatograph, was added to a flask fitted with an overhead stirrer and a condenser, and 6.2g sodium hydroxide (0.155 moles, 1.3 moles sodium hydroxide/mole epichlorohydrin) was added. The mixture was heated to 180°C under a brisk flow of $N_2$ to remove any residual water, and then allowed to cool to 120°C. The mixture was then treated with 10.9g epichlorohydrin (0.117 moles, 20 weight percent of the starting polyethercyclicpolyol), added in 1ml increments, such that the reaction temperature was maintained between 120°C and 125°C. The mixture was finally stirred at 125°C for two hours after the epichlorohydrin addition was complete. The $M_n$ = 460 and the $M_w$ = 65 000 for the product. The inhibition of fluid loss demonstrated in API tests is significantly higher after the post-treatment step than it was before.

## Claims

1. A method for preparing polyethercyclicpolyol by thermal condensation, comprising:
   (a) heating a reaction mixture comprising a reactant selected from the group consisting of (1) a polyol having at least three hydroxyl groups of which at least two of the hydroxyl groups are vicinal, (2) precursors of the polyol, (3) cyclic derivatives of the polyol, and (4) mixtures thereof, which heating initiates the thermal condensation;
   (b) removing water formed during the thermal condensation; and
   (c) continuing the thermal condensation until a predetermined quantity of moles of water per mole of reactant are removed, wherein the condensation goes to completion without incurring substantial undesirable degeneration.

2. A method for preparing polyethercyclicpolyol by thermal condensation, comprising:
   (a) heating a reaction mixture comprising a reactant selected from the group consisting of (1) a polyol having at least three hydroxyl groups of which at least two of the hydroxyl groups are vicinal, (2) precursors of the polyol, (3) cyclic derivatives of the polyol, and (4) mixtures thereof, which heating initiates the thermal condensation;
   (b) removing water formed during the thermal condensation; and
   (c) continuing the thermal condensation while adding additional reactant in such a manner that the reaction proceeds to completion at a rate faster than the additional reactant is being incorporated, thereby maximizing molecular weight of the polyethercyclicpolyol.

3. A method for preparing polyethercyclicpolyol by thermal condensation, comprising:
   (a) heating a reaction mixture comprising a basic catalyst and a reactant selected from the group consisting of (1) a polyol having at least three hydroxyl groups of which at least two of the hydroxyl groups are vicinal, (2) precursors of the polyol, (3) cyclic derivatives of the polyol, and (4) mixtures thereof, which heating initiates the thermal condensation;
   (b) removing water formed during the thermal condensations; and
   (c) continuing the thermal condensation to completion while controlling the pH of the reaction mixture within a preselected range by addition of the basic catalyst.

4. A method for preparing polyethercyclicpolyol by thermal condensation, comprising:
   (a) heating a reaction mixture comprising a reactant selected from the group consisting of (1) a polyol having at least three hydroxyl groups of which at least two of the hydroxyl groups are vicinal, (2) precursors of the polyol, (3) cyclic derivatives of the polyol, and (4) mixtures thereof, which heating initiates the thermal condensation;
   (b) removing water formed during the thermal condensation; and
   (c) continuing the thermal condensation and adding a final quantity of additional reactant to the reaction mixture when the thermal condensation is within a preselected degree of completion, thereby buffering the condensation and preventing undesirable degeneration.

5. Method according to any one of the claims 1-4, wherein prior to the thermal condensation going to completion an aromatic compound containing at least two hydroxyl groups is admixed with the reaction mixture.

6. The method according to claim 5, wherein the amount of aromatic compound is 0.5 to 10 % by weight of the total reactant mixture.

7. The method according to claim 5 or 6, wherein the aromatic compound is selected from the group consisting of bisphenol A, catechol, hydroquinone, resorcinol, 4,4',4''-methylidenetrisphenol and 4,4',4'',4'''-ethylidene tetrakisphenol.

8. Method according to any one of the claims 1-4, wherein prior to the thermal condensation going to completion an aliphatic dihydric alcohol is admixed with the reaction mixture.

9. The method according to claim 8, wherein the amount of aliphatic dihydric alcohol is up to 25 % by weight of the total reactant mixture.

10. The method according to claim 8 or 9, wherein the aliphatic dihydric alcohol is selected from the group consisting of ethylene glycol, propylene glycol, diethylene glycol, dipropylene glycol, triethylene glycol, tripropylene glycol and butanediol.

11. Method according to any one of the claims 1-4, wherein, prior to the thermal condensation going to completion epoxy alcohol is admixed with the reaction mixture.

12. The method according to claim 11, wherein the amount of epoxy alcohol is 5 to 35 % by weight of the total reactant mixture.

13. The method according to claim 11 or 12, wherein the epoxy alcohol is glycidol.

14. The method according to any one of the claims 1-4, prior to the thermal condensation going to completion epihalohydrin and an alkali metal salt is admixed with the reaction mixture.

15. The method according to claim 13, wherein the amount of epihalohydrin is 5 to 35 % by weight of the total reaction mixture and the alkali metal hydroxide is added in a molar ratio of 0.85 to 4.0 basis the epihalohydrin.

16. The method according to claim 14 or 15, wherein the epihalohydrin is epichlorohydrin and the alkali metal hydroxide is sodium hydroxide.

17. The method according to any one of the claims 1-16, wherein the reactant is glycerol and at least 1.05 moles of water per mole of the glycerol are removed.

18. The method according to claim 17, wherein least 1.12 moles of water per mole of glycerol are removed.

19. The method according to claim 17, wherein 1.15 to 1.25 moles of water per mole of glycerol are removed.

20. The method according to any one of the claims 1-16, wherein the reactant is a mixture including glycerol and cyclic derivatives of the glycerol and wherein the moles of water removed per mole of the cyclic derivatives of glycerol is equal to at least 1.05 minus the moles of water which would have been removed in thermally condensing the cyclic derivatives of the glycerol from a glycerol feedstock.

21. The method according to any one of the claims 1-16, wherein the reactant is glycerol and additional glycerol is added to the reaction mixture after the thermal condensation is at least 40 percent complete, basis the amount of reactant present at the end of the reaction.

22. The method according to claim 21, wherein the added glycerol comprises at least 3 percent by weight of the total glycerol.

23. The method according to of any one of the claims 1-16, wherein the reactant is glycerol and a minor quantity of glycerol is added to the reaction mixture when the thermal condensation is at least 90 percent complete.

24. The method according to claim 23, wherein the added glycerol is 0.2 to 2.0 percent by weight of the total reactant mixture.

25. The method according to any one of the claims 1-16, including controlling the temperature of the reaction mixture to stay below a maximum within the range of 250 to 295°C at a pressure of 40 to 80 mm Hg.

26. The method according to any one of the claims 1-16, wherein an alkali hydroxide catalyst is employed to control the starting pH of the reaction within a range of 5 to 13.5, and the final pH of the reaction mixture within a range of 5 to 9.5.

27. The method according to any one of the claims 1-16, wherein sodium chloride is present in the reactant mixture.

28. The method according to any one of the claims 1-16, wherein the initial condensation pressure is selected so that water is the principal overhead product.

29. A composition comprising a mixture of polyethercyclicpolyols characterized by the presence of at least one 5- to 7-membered ring structure per individual molecule in at least 80 percent of the molecular mass.

30. The composition according to claim 29, wherein a minimum of 20 percent of all the molecules participating in the formation of the polyethercyclicpolyol are involved in a cyclic structure.

31. The composition according to claim 29, wherein a minimum of 30 percent of all the molecules participating in the formation of the polyethercyclicpolyol are involved in a cyclic structure.

32. The composition according to claim 29, wherein a minimum of 40 percent of all the molecules participating in the formation of polyethercyclicpolyol are involved in a cyclic structure.

33. The composition according to claim 29, further characterized by binodal molecular weight distribution as determined by gel permeation chromatography.

34. The composition according to claim 29, wherein the polyethercyclicpolyol is further characterized by a molecular weight within the range of 50 000 to 300 000 as determined by three-column gel permeation chromatography.

35. The composition according to claim 29, wherein the polyethercyclicpolyol is further characterized by a molecular weight within the range of 75 000 to 250 000 as determined by three-column gel permeation chromatography.

36. A polyethercyclicpolyol of a reactant selected from the group consisting of (1) a polyol having at least three hydroxyl groups of which at least two of the hydroxyl groups are vicinal, (2) precursors of the polyol, (3) cyclic derivatives of the polyol, and (4) mixtures thereof, having a weight average molecular weight in the range of from 50 000-300 000.

37. The polyethercyclicpolyol according to claim 36, wherein the reactant is glycerol.

38. Use of a polyethercyclicpolyol prepared by the method according to any one of the claims 1-28 in a drilling fluid.

39. Use of the composition according to any one of the claims 29-35 in a drilling fluid.

40. Use of the polyethercyclicpolyol according to claim 36 or 37 in a drilling fluid.

14